# EUROPEAN PATENT APPLICATION

(11) **EP 4 629 657 A1**
(43) Date of publication of application: **08.10.2025**
(21) Application number: 25155790.6
(22) Date of filing: 04.02.2025
(51) Int. Cl.: H04Q 9/00, H04W 84/20

(54) **BATTERY SYSTEM AND BATTERY WIRELESS COMMUNICATION SYSTEM THEREOF**

(30) Priority: 02.04.2024 TW 113112445
(71) Applicant: Grace Connection Microelectronics Limited, Zhubei City 302052 (TW)
(72) Inventor: CHEN, Pei Wei, 302052 Zhubei City, Hsinchu County (TW)
(74) Representative: Viering, Jentschura & Partner mbB Patent- und Rechtsanwälte

(57) **Abstract**

The invention provides a battery system and a battery wireless communication system thereof. The battery wireless communication system includes a control unit, a master wireless communication unit, at least one monitoring chip, and at least one slave wireless communication unit. The master wireless communication unit is disposed in the control unit. The monitoring chips are respectively connected to battery cells. The at least one slave wireless communication unit is disposed adjacent to one of the at least one monitoring chip. The at least one slave wireless communication unit includes a one-to-one corresponding disposition with the at least one monitoring chip. A whisper wireless signal connection is established between the master wireless communication unit and the adjacent slave wireless communication units, by one-by-one whisper wireless communication.

## Description

### CROSS REFERENCE

The present invention claims priority to TW113112445, filed on April 2, 2024.

### BACKGROUND OF THE INVENTION

### Field of Invention

The present invention relates to a battery system and a battery wireless communication system thereof.

### Description of Related Art

Along with the market growth of the global energy storage requirements, the battery power storage systems have become critical in today's electronic device research and development. To improve the capability and efficiency of the battery power storage system, most of the battery packs on the market are designed to be connected in series. The DC voltage in the system increases accordingly with the battery number increase in the series connection. The challenge to the safety and stability of the battery power storage system is more difficult, as the DC voltage accumulated in the series connection increases and the DC voltage across the battery power storage system is higher.

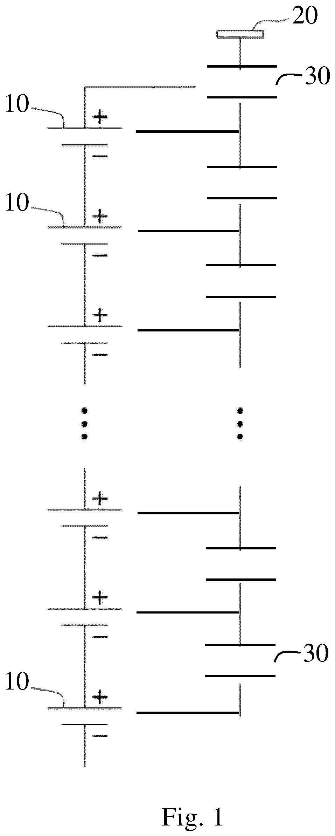

Most of the batteries, used in the industrial field and automotive battery power storage systems, are arranged in series connections. Traditionally, series capacitive coupling or parallel inductive coupling can be utilized to isolate (or break) the connection between the voltages of the adjacent batteries. As shown in Fig. 1, a schematic diagram of a battery system includes a battery cell 10, a control unit 20, and plural capacitors 30 connected in series. However, the lower reliability of the series capacitive coupling, can substantially affect the safety of the battery power storage system. In addition, the inductive coupling connected in parallel connection should withstand the high trans-voltage accumulated in the series connection of the battery cells. However, the reliability of their components affects the safety of the battery power storage system seriously.

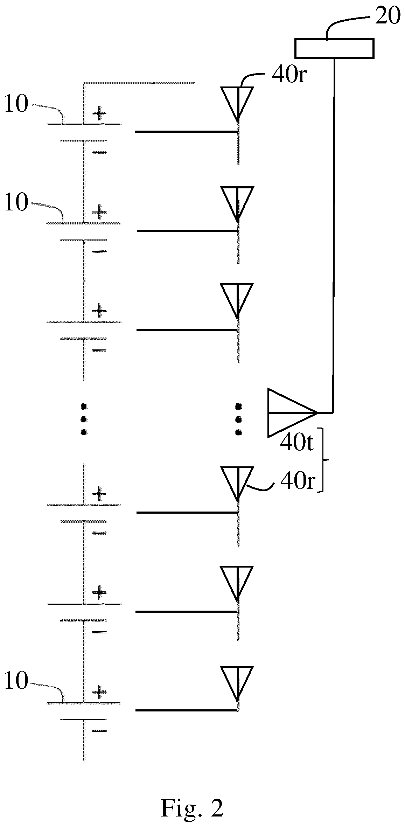

Therefore, the design of battery power storage systems becomes more and more complicated, and the battery communication systems are required to be monitored and collect information on the voltage and temperature of each battery in the system, to maintain the operation and safety of the batteries. When the series connection DC voltage and the voltage across the battery communication system are higher, the challenge of safety and stability of the battery communication system becomes more and more difficult. As shown in Fig. 2, to improve communication between the battery cells 10, the battery communication system includes the battery cells 10, the control unit 20, and a number of communication units (40r, 40t) in parallel connection. Communication unit 40t is electrically connected to the control unit 20 for transmitting signals. Communication unit 40t is connected to control unit 20 for sending signals, and the communication unit 40r is connected to each battery cell 10 for receiving signals. However, due to the communication collision and the impact of jamming signals between different communication ports and the control unit, the communication becomes unstable. Furthermore, it is difficult to effectively identify the position of each battery cell in the disposition sequence of the battery cells in the battery communication system, which brings lots of difficulties in the practical operation, assembly and maintenance.

### SUMMARY OF THE INVENTION

Considering the above technical needs, the present invention is related to a battery system and a battery wireless communication system thereof, which utilize wireless communication to embody the communication of battery packs in a series connection, and establishes a one-to-one wireless communication by one-by-one whisper wireless communication technology, which not only improves the reliability of the battery system to form a daisy chain communication path, but effectively overcomes communication collisions, and the impact of jamming signals.

In one perspective of the present invention, a battery wireless communication system is proposed. The battery wireless communication system includes: a control unit; a master wireless communication unit, disposed in the control unit; at least one monitoring chip, connected to at least one battery cell; and at least one slave wireless communication unit, disposed adjacent to the at least one monitoring chip, wherein the at least one slave wireless communication unit is in a one-to-one corresponding disposition with the at least one monitoring chip. by the one-by-one whisper wireless communication, a whisper wireless signal connection is established between the master wireless communication unit and the at least one slave wireless communication unit adjacent to the master wireless communication unit, or established between adjacent two of the slave wireless communication units.

In one embodiment, a count number of the at least one monitoring chip is plural, a count number of the at least one battery cell is plural, and a count number of the at least one slave wireless communication unit is plural. Each of the monitoring chips is connected to one of the battery cells, and the slave wireless communication units are respectively disposed to connect their adjacent monitoring chips. By the one-by-one whisper wireless communication, a first whisper wireless signal connection is established between the master wireless communication unit and the slave wireless communication unit adjacent to the master wireless communication unit. A second whisper wireless signal connection is established between the adjacent two of the slave wireless communication units. The first whisper wireless signal connection and the second whisper wireless signal connection can be combined into a one-to-one wireless communication connection, to form a daisy chain communication path.

In one embodiment, the master wireless communication unit starts to send a first wireless signal with an initial signal level, and progressively adjusts a signal level of the first wireless signal to limit a count number of the slave wireless communication units responding to the first wireless signal, until the count number for responding to the first wireless signal equals a preset unit count, to make the first whisper wireless signal connection to be effective only between the master wireless communication unit and the slave wireless communication unit adjacent to the master wireless communication unit.

In one embodiment, one of the slave wireless communication units starts to send a second wireless signal with the initial signal level, and progressively adjusts a signal level of the second wireless signal to limit a count number of the slave wireless communication units responding to the second wireless signal, until the count number for responding to the second wireless signal equals the preset unit count, to make the second whisper wireless signal connection to be effective only between the adjacent two of the slave wireless communication units.

According to another perspective of the present invention, a battery system is proposed. The battery system includes at least one battery cell and a battery wireless communication system. The battery wireless communication system includes: a control unit; a master wireless communication unit, disposed in the control unit; at least one monitoring chip connected to at least one battery cell; and at least one slave wireless communication unit located adjacent to the at least one monitoring chip. The at least one slave wireless communication unit includes a one-to-one corresponding disposition with the at least one monitoring chip. By the one-by-one whisper wireless communication, a whisper wireless signal connection is established between the master wireless communication unit and the at least one slave wireless communication unit adjacent to the master wireless communication unit, or between adjacent two of the slave wireless communication units.

For better understanding of the foregoing and other aspects of the present invention, the following embodiments, are described in detail with the drawings as follows:

### BRIEF DESCRIPTION OF THE DRAWINGS

Fig. 1 shows a schematic diagram of a prior battery system.
Fig. 2 shows a schematic diagram of a prior battery communication system.
Fig. 3 shows a schematic diagram of the battery system (100) and the battery wireless communication system (CMS) thereof according to one embodiment of the present invention.
Fig. 4 shows an enlarged schematic diagram of area 60 according to Fig. 3.

### DESCRIPTION OF THE PREFERRED EMBODIMENTS

The objectives, technical details, features, and effects of the present invention will be better understood with regard to the detailed description of the embodiments below, with reference to the figures. The technical terms in this specification are based on customary terms in the art. When a term is described or defined in this specification, the interpretation of the term is based on the description or definition in this specification. Each embodiment of the present invention has one or more technical features. To the extent possible, a person having ordinary knowledge in the art may selectively implement some or all of the technical features of any embodiment, or selectively combine some or all of the technical features of the embodiments.

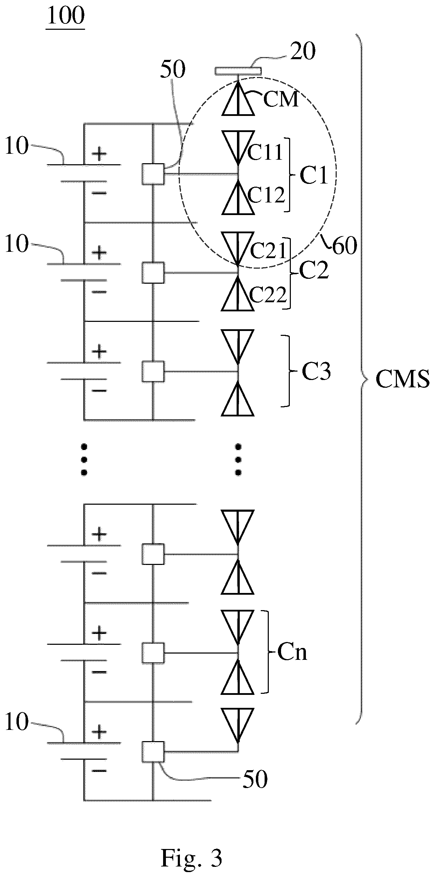

Please refer to Fig. 3, wherein a schematic diagram of a battery system 100 and a battery wireless communication system CMS according to one embodiment of the present invention is shown. The battery system 100 includes several battery cells 10 and a battery wireless communication system CMS. In one embodiment, the number of battery cells 10 may be only one. The battery cells 10 can be, for example, lithium phosphate batteries or lithium ternary batteries. The battery cells 10 are connected in series. During operation of the current battery system 100, the battery cells 10 are required to be monitored one by one, to better confirm whether the temperature, voltage, and other battery parameters are in normal status . In the case of the battery cells 10 being lithium phosphate batteries, which have a relatively gentle battery discharge curve, and it is necessary to set up a monitoring chip 50 for each battery cell 10 to carry out precise monitoring. In one embodiment, the number of monitoring chip 50 can also be only one.

In one embodiment, the battery cells 10 are preferably lithium phosphate batteries, which have a relatively gentle battery discharge curve. When the individual battery power storage grows from a few amp-hours (2 to 3Ah) to hundreds of amp-hours (200 to 300Ah), the battery system needs more accurate and more stringent battery parameters to monitor and maintain the stability of the battery system. For this purpose, the present battery system can be designed as follows : at least one battery cell 10 includes a one-to-one corresponding disposition with monitoring chip 50, as shown in Fig. 3.

As shown in Fig. 3, the battery wireless communication system CMS includes a monitoring chip 50, a control unit 20, and plural wireless communication units. The wireless communication units include a master wireless communication unit CM and plural slave wireless communication units C1, C2, C3, ... Cn, wherein the count number of slave wireless communication units can be only one. The monitoring chip 50 is correspondingly one-on-one connected to the battery cell 10. Therefore, the count number of slave wireless communication units C1, C2, C3, ... Cn, is preferably the same as the count number of monitoring chips 50.

In one embodiment, the control unit 20 includes the master wireless communication unit CM. The control unit 20 can control the monitoring chip 50 to collect monitoring information. The monitoring information can include circuit current, resistance, voltage, temperature of the battery cell 10, etc. Each of the slave wireless communication units C1, C2, C3, ... Cn, includes a one-to-one corresponding disposition with its adjacent monitoring chip 50. The communication between adjacent two of the control unit 20 and the monitoring chips (through the first monitoring chip 50 until the last monitoring chip 50), can be operated by a whisper wireless communication only between adjacent two devices, such as the master wireless communication unit CM and the slave wireless communication units C1, C2, C3, ... Cn, to transmit commands to the monitoring chips 50 or to return monitoring information from the monitoring chips 50. These wireless communication units (the master wireless communication unit CM, and the slave wireless communication units C1, C2, C3, ... Cn) form a daisy chain communication path. The whisper wireless communication is established only between adjacent two wireless communication units (including the master wireless communication unit CM and the slave wireless communication units C1, C2, C3, ... Cn). That is, there is not any wireless communication established between one communication unit and another non-adjacent communication unit.

In one embodiment, the whisper wireless communication carried out by the wireless communication units (master wireless communication unit CM, and slave wireless communication units C1, C2, C3, ... Cn) therebetween, is effective only for wireless communication between adjacent two of the wireless communication units to establish a whisper wireless communication connection, without interfering with other nonadjacent wireless communication units or being subjected to interference by other nonadjacent wireless communication units C1, C2, C3, ... Cn. For example, a first whisper wireless signal connection is established as the only effective communication between the master wireless communication unit CM and the adjacent slave wireless communication unit C1. At this moment, the master wireless communication unit CM does not establish any wireless signal connection with the other slave wireless communication units C2, C3, ... or Cn. Alternatively, a second whisper wireless signal connection is established as the only effective communication between the slave wireless communication unit C1 and another adjacent slave wireless communication unit C2. The first whisper wireless signal connection is effective only between the slave wireless communication unit C1 and the master wireless communication unit CM, and the second whisper wireless signal connection is effective only between the slave wireless communication unit C1 cand the slave wireless communication unit C2. The slave wireless communication unit C1 does not establish wireless communication with the other slave wireless communication units C3, ...Cn.

In one embodiment, the battery wireless communication system can be designed to a one-to-one corresponding arrangement between one of the slave wireless communication units C1, C2, C3, ... Cn, and one of the monitoring chips 50. That is, the slave wireless communication units C1, C2, C3, ... Cn are respectively in a one-to-one corresponding disposition with the monitoring chips 50, to form a daisy chain communication path, as shown in Fig. 3.

The control unit 20 can be, for example, a circuit, a circuit board, a storage device for program code, or a chip. The chip can be, for example, a central processing unit (CPU), programmable general-purpose or special-purpose micro control unit (MCU), microprocessor, digital signal processor (DSP), programmable controller(s), application specific integrated circuit (ASIC), graphics processing unit (GPU), image signal processor (ISP), image processing unit (IPU), arithmetic logic unit (ALU), complex programmable logic device (CPLD), field programmable logic device (FPLD), field programmable gate arrays (FPGA), other similar components or combinations of the aforementioned components.

In one embodiment, the control unit 20 can be calibrated via a master computer or a master server so that the control unit 20 has standardized time information. The control unit 20 may be calibrated via these wireless communication units (including the master wireless communication unit CM, or the slave wireless communication units C1, C2, C3...Cn) to transmit a time calibration signal to these monitoring chips 50, and these monitoring chips 50 synchronize their internal circuit time according to the time calibration signal.

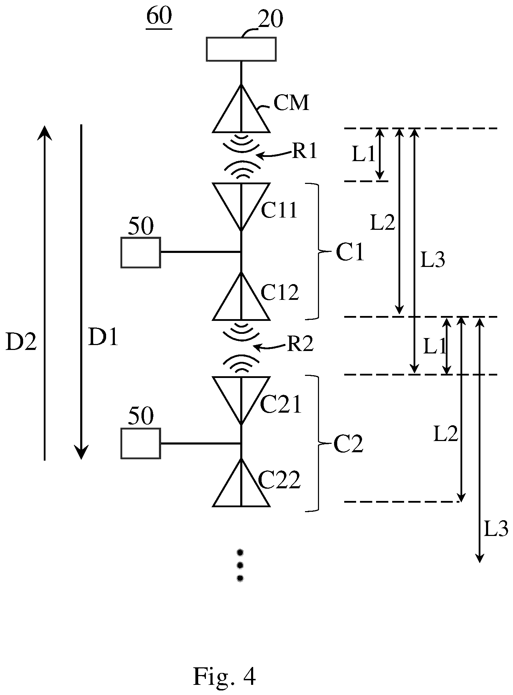

Please refer to Figs. 3 and 4, wherein Fig. 4 illustrates an enlarged schematic diagram based on area 60 of Fig. 3. The wireless communication units (including the master wireless communication unit CM, or the slave wireless communication units C1, C2, C3...Cn) of the present invention can implement the technology of whisper wireless communication. The control unit 20 is electrically or wirelessly connected to the master wireless communication unit CM. Each of the slave wireless communication units C1, C2, C3, ... Cn, preferably includes both a first wireless communication circuit and a second wireless communication circuit. For example, the slave wireless communication unit C1 includes a first wireless communication circuit C11 and a second wireless communication circuit C12; and the slave wireless communication unit C2 includes a first wireless communication circuit C21 and a second wireless communication circuit C22. The slave wireless communication unit C1 and the slave wireless communication unit C2 are respectively connected to their adjacent monitoring chips 50, as shown in Fig. 4.

Please refer to Figs. 3 and 4, wherein the wireless communication units (including the master wireless communication unit CM, and the slave wireless communication units C1, C2, C3, ... Cn) are wirelessly connected to each other, without direct electrical wire conduction between the wireless communication units. For example, the master wireless communication unit CM and the slave wireless communication unit C1 (the first wireless communication circuit C11) are connected wirelessly without direct electrical wire conduction to each other. And the slave wireless communication unit C1 (the second wireless communication circuit C12) is wirelessly connected to the slave wireless communication unit C2 (the first wireless communication circuit C21), without direct electrical wire conduction to each other. In this way, the present invention can withstand the high trans-voltage accumulated due to the series connection of the battery cells 10, with an insulation medium such as air, to greatly improves the operation safety of the battery system 100.

As shown in Figs. 3 and 4, the master wireless communication unit CM is electrically connected to the control unit 20, and the slave wireless communication unit C1 (including the first wireless communication circuit C11 and the second wireless communication circuit C12) is electrically connected to its adjacent monitoring chip 50. The slave wireless communication unit C2 (including the first wireless communication circuit C21 and the second wireless communication circuit C22) is electrically connected to its adjacent monitoring chip 50, as shown in Fig. 4.

In one embodiment, there is a shorter distance L1 between the adjacent two of the wireless communication units (including the master wireless communication unit CM, and the slave wireless communication units C1, C2, C3, ... Cn). For example, the shorter distance L1 is between the master wireless communication unit CM and the first wireless communication circuit C11 of the slave wireless communication unit C1. Further, there is a longer distance L2 between the adjacent two of the wireless communication units (including the master wireless communication unit CM, and the slave wireless communication units C1, C2, C3, ... Cn) . For example, the longer distance L2 is between the master wireless communication unit CM and the second wireless communication circuit C12 of the slave wireless communication unit C1. There is a distance L3 between nonadjacent two wireless communication units (including the master wireless communication unit CM, and the slave wireless communication units C1, C2, C3, ... Cn). For example, the distance L3 is between the master wireless communication unit CM and the slave wireless communication unit C2 (precisely, the first wireless communication circuit C21 of the slave wireless communication unit C2). Based on the infrastructure of the daisy chain communication path, the master wireless communication unit CM, the slave wireless communication unit C1, and the slave wireless communication unit C2, are closely and sequentially disposed by the whisper wireless communication. That is, the distance L1 will be shorter than the distance L2, and the distance L2 will be shorter than the distance L3, as shown in Fig. 4. Therefore, the present whisper wireless communication can be used for determining a correspondingly physical distance relationship of the wireless daisy chain communication path.

In one embodiment, two adjacent wireless communication units (including the master wireless communication unit CM, and the slave wireless communication units C1, C2, C3, ... Cn), are wirelessly and sequentially connected by whisper wireless communication with each other. The mechanism of the whisper wireless communication of the present invention is detailed described as follows. For example, at first, the master wireless communication unit CM starts to send the first wireless signal with an initial signal level, and then progressively adjusts the signal level of the first wireless signal, to limit a count number of the slave wireless communication units responding to the master wireless communication unit CM (or, responding to the first wireless signal), until the count number for responding to the first wireless signal equals a preset unit count. The preset unit count can preferably be, but is not limited to, 1. Since the distance L1 is shorter than the distance L2, and the distance L2 is shorter than the distance L3, when the preset unit count is 1, only the slave wireless communication unit C1 can respond to the master wireless communication unit CM. Therefore, the master wireless communication unit CM and the adjacent slave wireless communication unit C1 establish a first whisper wireless signal connection R1, which is effective only between the master wireless communication unit CM and the adjacent slave wireless communication unit C1, as shown in Fig. 4.

In one embodiment, the mechanism of the whisper wireless communication of the present invention is further detailed described as follows. One of the wireless communication units (for example, the slave wireless communication unit C1 can be referred as the one of the wireless communication unit) starts to send a second wireless signal with an initial signal level, and progressively adjusts the signal level of the second wireless signal, to limit a count number of the remaining slave wireless communication units C2, C3, ... Cn responding to the second wireless signal, until the count number for responding to the second wireless signal equals a preset unit count. The preset unit count can preferably be, but is not limited to, 1. Based on the infrastructure of the daisy chain communication path, the distance L1 is the shortest distance between the slave wireless communication unit C1 and the slave wireless communication unit C2. That is, the distance L1 is the distance between the second wireless communication circuit C12 of the slave wireless communication unit C1 and the first wireless communication circuit C21 of the slave wireless communication unit C2. The distance L1 is shorter than the distance L2, which is between the second wireless communication circuit C12 of the slave wireless communication unit C1 and the second wireless communication circuit C22 of the slave wireless communication unit C2. The distance L2 is shorter than the distance L3 between the slave wireless communication units C1 and C3, wherein the slave wireless communication units C1 and C3 are non-adjacent. When the preset unit count is 1, only the slave wireless communication unit C2 can respond to the second wireless signal from the slave wireless communication unit C1. Therefore, the slave wireless communication unit C1 and the slave wireless communication unit C2 establish the second whisper wireless signal connection R2, which is effective only between the slave wireless communication unit C1 and the slave wireless communication unit C2, as shown in Fig. 4.

In one embodiment, a signal transmission direction of the first whisper wireless signal connection R1 may be a signal transmission direction D1, wherein the first wireless signal is transmitted from the master wireless communication unit CM to the adjacent slave wireless communication unit C1. Or, the signal transmission direction of the first whisper wireless signal connection R1 can be a signal transmission direction D2, wherein the first wireless signal is transmitted from the slave wireless communication unit C1 to the master wireless communication unit CM, as shown in Fig. 4.

In one embodiment, the signal transmission direction of the second whisper wireless signal connection R2 can be the signal transmission direction D1, wherein the second wireless signal is transmitted from the slave wireless communication unit C1 to the next adjacent slave wireless communication unit C2. Or, the signal transmission direction of the second whisper wireless signal connection R2 can be the signal transmission direction D2, wherein the second wireless signal is transmitted from the slave wireless communication unit C2 to the slave wireless communication unit C1. Therefore, the whisper wireless signal connection can be established between the master wireless communication unit CM and the adjacent slave wireless communication unit C1, and can be also established between two adjacent slave wireless communication units (from the slave wireless communication unit C1, through the slave wireless communication units C2, C3, ... Cn, in sequence), as shown in Figs. 3 and 4. The daisy chain communication path can be accordingly established from the master wireless communication unit CM, to the slave wireless communication unit C1, and the slave wireless communication units C2, C3, ... Cn, in sequence, as shown in Fig. 3.

In one embodiment, the mechanism of the whisper wireless communication of the present invention is detailed described as follows. The above initial signal level can be, for example, a high preset signal strength, and the following step is to adjust the signal level progressively. The steps of progressively adjusting the signal levels include progressively reducing the signal strength of the first or second wireless signal from the high preset signal strength, until the count number of the slave wireless communication units responding to the first or second wireless signal equals the preset unit count. Or, the initial signal level can be, for example, a low preset signal strength, and the steps of progressively adjusting the signal levels include progressively increasing the signal strength of the first or second wireless signal from the low preset signal strength, until the count number of the slave wireless communication units responding to the first or second wireless signal equals the preset unit count.

In one embodiment, the above initial signal level can be, for example, a high preset signal-to-noise ratio, and the steps of progressively adjusting the signal levels include progressively reducing a signal-to-noise ratio of the first or second wireless signal from the high preset signal-to-noise ratio, until the count number of the slave wireless communication units responding to the first or second wireless signal equals the preset unit count. Or, the initial signal level can be, for example, a low preset signal-to-noise ratio, and the steps of progressively adjusting the signal levels include progressively increasing a signal-to-noise ratio of the first or second wireless signal from the low preset signal-to-noise ratio, until the count number of the slave wireless communication units responding to the first or second wireless signal equals the preset unit count.

According to the above embodiments, the battery system 100 and its battery wireless communication system CMS form a daisy chain communication path, which uses the wireless communication units to transmit commands and monitor information. The monitoring chips 50 (connected to the battery cell 10) utilize the wireless communication unit to connect each other, with a near-field coupling to establish radio frequency whispering communication. Compared to traditional wireless broadcasting technology, the above embodiments of the present invention can reduce the influence of network collisions and the impact of jamming signals in the air, to achieve safe and stable communication between the battery cells 10. Moreover, the necessary signal strength of the RF whispering wireless communication is very low, which can be used to recognize the individual locations and disposition sequence of the battery cells in each wireless signal transmission in the battery system 100, to improve the convenience of assembly check and maintenance. In addition, for example, the first whispering wireless communication circuit R1 and the second whispering wireless communication circuit R2 of the wireless communication units, are not operated via directly connected physical wire. The air dielectric between the battery cells 10, can withstand the high trans-voltage accumulated due to the series connection of the battery cells 10, with an insulation medium such as air, to greatly improve the safety of the operation of the battery system 100.

The present invention provides various features in the embodiments of the present invention. Specific examples of components and configurations (e.g., numbers, values, or names mentioned) are described above to simplify/illustrate some of the embodiments of this present invention. These components and configurations are examples only and not intended to limit the scope of the present invention. In addition, some embodiments of the present invention may include repeated reference symbols and/or letters, and these repetitions are for simplicity and clarity purposes, which do not by themselves specify any limitation between the various embodiments.

The present invention has been described in considerable detail with reference to certain preferred embodiments thereof. It should be understood that the description is for illustrative purpose, not for limiting the scope of the present invention. Those skilled in this art can readily conceive variations and modifications without departing from the spirit of the present invention.

## Claims

1. A battery wireless communication system, including:
at least one monitoring chip, connected to at least one battery cell;
a master wireless communication unit, disposed in a control unit; and
at least one slave wireless communication unit, disposed adjacent to the at least one monitoring chip, wherein the at least one slave wireless communication unit is in a one-to-one corresponding disposition with the at least one monitoring chip;
wherein, by one-by-one whisper wireless communication, a whisper wireless signal connection is established between the master wireless communication unit and the at least one slave wireless communication unit adjacent to the master wireless communication unit, or established between any adjacent two of the slave wireless communication units.

2. The battery wireless communication system according to claim 1, wherein a count number of the at least one monitoring chip is plural, a count number of the at least one battery cell is plural, and a count number of the at least one slave wireless communication unit is plural, wherein each of the monitoring chips is connected to one of the battery cells, and the slave wireless communication units are respectively disposed to connect the adjacent monitoring chips, wherein by the one-by-one whisper wireless communication, a first whisper wireless signal connection is established between the master wireless communication unit and the slave wireless communication unit adjacent to the master wireless communication unit, and a second whisper wireless signal connection is established between any of the adjacent two of the slave wireless communication units, wherein the first whisper wireless signal connection and the second whisper wireless signal connection are combined into a one-to-one wireless communication connection, to form a daisy chain communication path.

3. The battery wireless communication system according to claim 2, wherein the one-by-one whisper wireless communication includes: the master wireless communication unit starting to send a first wireless signal with an initial signal level, and progressively adjusting a signal level of the first wireless signal to limit a count number of the slave wireless communication units responding to the first wireless signal, until the count number for responding to the first wireless signal equals a preset unit count, to make the first whisper wireless signal connection to be effective only between the master wireless communication unit and the adjacent slave wireless communication unit.

4. The battery wireless communication system according to claim 3, wherein the one-by-one whisper wireless communication further includes: one of the slave wireless communication units starting to send a second wireless signal with the initial signal level, and progressively adjusting a signal level of the second wireless signal to limit a count number of the slave wireless communication units responding to the second wireless signal, until the count number for responding to the second wireless signal equals the preset unit count, to make the second whisper wireless signal connection to be effective only between the adjacent two of the slave wireless communication units.

5. The battery wireless communication system according to claim 4, wherein the initial signal level is a high preset signal strength, and the step of progressively adjusting the signal level includes: progressively reducing the signal strength of the first or second wireless signal from the high preset signal strength, until the count number of the slave wireless communication units responding to the first or second wireless signal equals the preset unit count.

6. The battery wireless communication system according to claim 4, wherein the initial signal level is a low preset signal strength, and the step of progressively adjusting the signal level includes: progressively increasing the signal strength of the first or second wireless signal from the low preset signal strength, until the count number of the slave wireless communication units responding to the first or second wireless signal equals the preset unit count.

7. The battery wireless communication system according to claim 4, wherein the initial signal level is a high preset signal-to-noise ratio, and the step of progressively adjusting the signal level includes: progressively reducing a signal-to-noise ratio of the first or second wireless signal from the high preset signal-to-noise ratio, until the count number of the slave wireless communication units responding to the first or second wireless signal equals the preset unit count.

8. The battery wireless communication system according to claim 4, wherein the initial signal level is a low preset signal-to-noise ratio, and the step of progressively adjusting the signal level includes: progressively increasing a signal-to-noise ratio of the first or second wireless signal from the low preset signal-to-noise ratio, until the count number of the slave wireless communication units responding to the first or second wireless signal equals the preset unit count.

9. The battery wireless communication system according to claim 2, wherein the master wireless communication unit and the slave wireless communication unit adjacent to the master wireless communication unit, establish the first whisper wireless signal connection by the one-by-one whisper wireless communication, a distance between the master wireless communication unit and the slave wireless communication unit adjacent to the master wireless communication unit, is shorter than a distance between the master wireless communication unit and another one of the slave wireless communication units, and
adjacent two of the slave wireless communication units, establish the second whisper wireless signal connection by the one-by-one whisper wireless communication, a distance between the adjacent two of the slave wireless communication units, is shorter than a distance between non-adjacent two of the slave wireless communication units.

10. A battery system, including:
at least one battery cell; and
a battery wireless communication system, including:
a control unit;
a master wireless communication unit, disposed in the control unit;
at least one monitoring chip, connected to the at least one battery cell; and
at least one slave wireless communication unit, disposed adjacent to the at least one monitoring chip, the at least one slave wireless communication unit including a one-to-one corresponding disposition with the at least one monitoring chip;
wherein, by one-by-one whisper wireless communication, a whisper wireless signal connection is established between the master wireless communication unit and the at least one slave wireless communication unit adjacent to the master wireless communication unit, or between adjacent two of the slave wireless communication units.

11. The battery system according to claim 10, wherein a count number of the at least one monitoring chip is plural, a count number of the at least one battery cell is plural, a count number of the at least one slave wireless communication unit is plural, each of the monitoring chips being connected to one of the battery cells, and the slave wireless communication units being respectively disposed to connect the adjacent monitoring chips, wherein by the one-by-one whisper wireless communication, a first whisper wireless signal connection is established between the master wireless communication unit and the slave wireless communication unit adjacent to the master wireless communication unit, and a second whisper wireless signal connection is established between adjacent two of the slave wireless communication units, wherein the first whisper wireless signal connection and the second whisper wireless signal connection are combined into a one-to-one wireless communication connection, to form a daisy chain communication path.

12. The battery system according to claim 11, wherein a step of the one-by-one whisper wireless communication includes:
the master wireless communication unit starting to send a first wireless signal with an initial signal level, and
progressively adjusting the signal level to limit a count number of the slave wireless communication units responding to the first wireless signal, until the count number equals a preset unit count, to make the first whisper wireless signal connection to be effective only between the master wireless communication unit and the adjacent slave wireless communication unit.

13. The battery system according to claim 12, wherein the one-by-one whisper wireless communication includes: one of the slave wireless communication unit starting to send a second wireless signal with the initial signal level, and progressively adjusting the signal level to limit a count number of the slave wireless communication units responding to the second wireless signal, until the count number for responding to the second wireless signal equals the preset unit count, to make the second whisper wireless signal connection to be effective only between adjacent two of the slave wireless communication units.

14. The battery system according to claim 13, wherein the initial signal level is a high preset signal strength, and the step of progressively adjusting the signal level includes:
progressively reducing the signal strength of the first or second wireless signal from the high preset signal strength, until the count number for responding to the first or second wireless signal equals the preset unit count; or, the initial signal level is a low preset signal strength, and the step of progressively adjusting the signal level includes:
progressively increasing the signal strength of the first or second wireless signal from the low preset signal strength, until the count number of the slave wireless communication units responding to the first or second wireless signal equals the preset unit count.

15. The battery system according to claim 13, wherein the initial signal level is a high preset signal-to-noise ratio, and the step of progressively adjusting the signal level includes: progressively reducing a signal-to-noise ratio of the first or second wireless signal from the high preset signal-to-noise ratio, until the count number of the slave wireless communication units responding to the first or second wireless signal equals the preset unit count; or, the initial signal level is a low preset signal-to-noise ratio, and the step of progressively adjusting the signal level includes:
progressively increasing a signal-to-noise ratio of the first or second wireless signal from the low preset signal-to-noise ratio, until the count number of the slave wireless communication units responding to the first or second wireless signal equals the preset unit count.
